# EUROPÄISCHE PATENTSCHRIFT

(11) **EP 1 076 043 B1**
(45) Veröffentlichungstag und Bekanntmachung des Hinweises auf die Patenterteilung: **14.07.2004**
(21) Anmeldenummer: 00116514.1
(22) Anmeldetag: 31.07.2000
(51) Int. Cl.: C03B 19/10

(54) **Verfahren für die Herstellung dichter Quarzglas-Körnung**
Process for producing dense quartz glass granules
Procédé de fabrication de granules denses en verre de quartz

(30) Priorität: 13.08.1999 DE 19937861
(43) Veröffentlichungstag der Anmeldung: 14.02.2001
(73) Patentinhaber: Heraeus Quarzglas GmbH & Co. KG, 63450 Hanau (DE)
(72) Erfinder: Gerhardt, Rolf, 63546 Hammersbach (DE); Köppler, Rainer, Dr., 63500 Seligenstadt (DE); Ponto, Werner, 63486 Bruchköbel (DE); Werdecker, Waltraud, 63456 Hanau (DE)

(56) Entgegenhaltungen:
- EP-A- 0 389 128
- WO-A-88/03914
- WO-A-97/16384
- DE-A- 1 596 703
- FR-A- 780 527
- GB-A- 2 083 806
- GB-A- 2 176 774
- US-A- 3 341 314
- US-A- 5 611 833
- US-A- 5 881 090
- PATENT ABSTRACTS OF JAPAN vol. 1999, no. 12, 29. Oktober 1999 (1999-10-29) & JP 11 199219 A (NIPPON SANSO CO LTD), 27. Juli 1999 (1999-07-27)

## Beschreibung

Die Erfindung betrifft ein Verfahren für die Herstellung von dichter, amorpher Quarzglas-Körnung, durch Erzeugen eines porösen Granulats aus amorphem SiO₂-Pulver und Verglasen des Granulats.

Amorphes SiO₂-Pulver wird beispielsweise durch Flammhydrolyse oder Oxidation siliziumhaltiger Verbindungen, durch Hydrolyse organischer Siliziumverbindungen nach dem sogenannten Sol-Gel-Verfahren oder durch Hydrolyse anorganischer Siliziumverbindungen in einer Flüssigkeit erhalten. Beispielsweise fällt amorphes SiO₂-Pulver mit einer hohen spezifischen Oberfläche im Bereich zwischen 40 m²/g und ca. 400 m²/g bei der Herstellung von synthetischem Quarzglas für Lichtwellenleiter als Nebenprodukt in großen Mengen an. Die Wiederverwertung des Pulvers durch Einschmelzen ist aber problematisch. Wegen ihrer geringen Schüttdichte lassen sie sich nicht unmittelbar zu durchsichtigen, blasenarmen Quarzglaskörpem aufschmelzen. Zur Verdichtung der Pulver sind beispielsweise Naßgranulierungsverfahren gebräuchlich, bei denen aus einer wässrigen, kolloidalen Dispersion derartiger SiO₂-Pulver durch ständiges Mischen oder Rühren ein Sol und daraus unter allmählichem Entzug der Feuchtigkeit ein Agglomerat in Form von porösem Granulat erzeugt wird.

In einem ersten gattungsgemäßen Verfahren nach der DE-A1-44 24 044 wird vorgeschlagen, eine wäßrige Suspension aus pyrogen hergestelltem Kieselsäurepulver in einem Mischbehälter mit rotierendem Wirblerwerkzeug zu behandeln, dessen Umfangsgeschwindigkeit während einer ersten Mischphase auf einen Wert im Bereich von 15 m/s bis 30 m/s, und in einer zweiten Mischphase auf 30 m/s oder mehr eingestellt wird. Nach der ersten Mischphase wird eine grobkörnige Masse erhalten. Der Verdichtungsgrad der grobkörnigen Masse wird erhöht, indem amorpher Kieselsäurestaub hinzugegeben, und in der zweiten Mischphase die grobkörnige Masse unter intensiver Misch- und Schlagbeanspruchung zerkleinert wird. Dabei tritt gleichzeitig Wasser aus der Oberfläche der körnigen Masse aus, das durch Zugabe von weiterem Kieselsäurepulver abgepudert wird, um ein Verkleben der Körnung zu verhindern. Das so erhaltene poröse und rieselfähige SiO₂-Granulat wird anschließend getrocknet und durch Sintern bei Temperaturen zwischen 1000°C und 1200°C verfestigt.

In der US-A-5,604,163 ist ein Verfahren für die Herstellung von Pulver aus synthetischem Quarzglas gemäß der eingangs genannten Gattung beschrieben. Ein nach der Sol-Gel-Methode aus Tetramethoxysilan und Wasser hergestelltes Gel wird im Vakuum rasch getrocknet, wobei es unter Bildung von SiO₂-Granulat zerbricht. Das Granulat mit Teilchengrößen zwischen 100 µm und 500 µm wird anschließend in einen Sinterbehälter aus Quarzglas eingefüllt und in einem elektrisch beheizten Ofen chargenweise gesintert. Hierzu wird das Granulat mit einer Aufheizrate von 200 °C/h auf 1150 °C erhitzt und bei dieser Temperatur 35 Stunden gehalten. Die so erhaltene dichte Quarzglas-Körnung kann anschließend mittels den konventionellen Verfahren, wie dem Verneuil-Verfahren, zu Quarzglasprodukten verarbeitet werden.

Um Blasenbildung beim Einschmelzen zu vermeiden, ist eine porenfreie Quarzglas-Körnung vorteilhaft. Die nach den bekannten Verfahren hergestellte Quarzglas-Körnung kann aber noch Restgase enthalten, die zu Blasen führen. Eine Senkung des Gehalts an Restgasen durch längere Sinterzeiten oder höhere Sintertemperaturen ist mit Zeit- bzw. mit Kostenaufwand verbunden. Einer Erhöhung der Sintertemperatur sind auch dadurch Grenzen gesetzt, daß die Granulat-Körner bei hohen Temperaturen erweichen und dabei zu einer undefinierten, porenhaltigen Quarzglasmasseagglomerieren.

Insbesondere bei hohen Temperaturen kann die Quarzglas-Körnung durch das Material des Sinterbehälters verunreinigt werden. Die Kontaminationsgefahr kann zwar durch Einsatz geeigneter Sinterbehälter, beispielsweise aus hochreinem Quarzglas, reduziert werden. Jedoch sind derartige Sinterbehälter teuer. Zudem sind Sinterbehälter aus Quarzglas für Sintertemperaturen oberhalb ca. 1400°C nicht geeignet.

Der Erfindung liegt daher die Aufgabe zugrunde, ein kostengünstiges Verfahren für die Herstellung dichter, hochreiner Quarzglas-Körnung anzugeben.

Diese Aufgabe wird ausgehend von dem eingangs beschriebenen Verfahren erfindungsgemäß dadurch gelöst, daß das poröse Granulat in einer Brenngasflamme fein verteilt wird, und in der Brenngasflamme unter Kollabieren des Porenraumes im Granulat zu einer transparenten, porenfreien SiO₂- Körnung verglast wird.

Unter Granulat werden opake, porenbehaftete SiO₂-Körner verstanden, die sich aus einer Vielzahl von Primärpartikeln zusammensetzen; unter verglaster Körnung dagegen versteht man tranparente, porenfreie SiO₂-Körner mit amorpher Struktur.

Bei dem erfindungsgemäßen Verfahren wird das poröse SiO₂-Granulat einer Brenngasflamme ausgesetzt, darin fein verteilt, erhitzt und verglast. Die Brenngasflamme ist hinsichtlich der Temperatureinstellung flexibler als die bei dem bekannten Verfahren. Insbesondere sind mit der Brenngasflamme höhere Temperaturen einstellbar. Dabei kann das Granulat sehr hohen Sintertemperaturen in der Brenngasflamme ausgesetzt werden, ohne daß es zu Agglomeraten zusammensintert. Gleichzeitig werden Probleme hinsichtlich der Hitzebeständigkeit von eingesetzten Sinterbehälter, wie Öfen oder Tiegel umgangen. Darüberhinaus ist eine Verunreinigung des SiO₂-Granulats durch Kontakt mit Wandungen eines Sinter- oder Verglasungsbehälters ausgeschlossen.

Beim Durchgang durch die Brenngasflamme kollabiert der Porenraum des Granulates und es entsteht eine amorphe, dichte Quarzglas-Körnung. Hohe Temperaturen beschleunigen die Ausdiffusion von Restgasen aus dem porösen Granulat, erleichtern die Einstellung einer möglichst hohen Dichte der Quarzglas-Körnung und verkürzen die dafür erforderlichen Sinterzeiten von Stunden auf Sekunden.

Die Brenngasflamme wird durch Verbrennung einer Wasserstoff enthaltenden Komponente, wie Wasserstoff selbst oder einer Kohlenwasserstoffverbindung, wie Propan oder Acetylen, erzeugt. Als Reaktionspartner kommen Sauerstoff, Sauerstoffverbindungen, Halogene und Halogenverbindungen in Frage.

Wesentlich ist, daß die Granulat-Körner beim Verglasen nicht agglomerieren. Eine Agglomeration wird dadurch vermieden, daß das Granulat in der Brenngasflamme in fein verteilter Form dispergiert ist und in dieser Verteilung der Brenngasflamme ausgesetzt wird. Beispielsweise kann das Granulat in die Brenngasflamme eingeblasen, eingesprüht oder eingestreut werden. Durch die feine Verteilung des Granulats in der Brenngasflamme werden die einzelnen Granulat-Körner getrennt voneinander innerhalb kurzer Zeit auf hohe Temperaturen erhitzt, so daß sie nicht miteinander verkleben können. Die feine Verteilung gewährleistet, daß alle Körner gleichermaßen und darüberhinaus bei besonders hohen Temperaturen der Brenngasflamme ausgesetzt und verdichtet werden.

Das erfindungsgemäße Verfahren erlaubt auch eine kontinuierliche Herstellung von SiO₂-Körnung, indem das Granulat der Brenngasflamme kontinuierlich zugeführt wird.

Vorteilhafte Ausgestaltungen der Erfindung sind in den Unteransprüchen ausgeführt.

Besonders einfach gestaltet sich eine Verfahrensweise, bei der das Granulat in die Brenngasflamme eingerieselt wird. Das Granulat wird dabei in fein verteilter Form von oben in die Brenngasflamme eingestreut. Die Orientierung der Brenngasflamme ist dabei nicht wesentlich; sie kann senkrecht zur Fallrichtung des Granulats, parallel dazu, oder auch schräg dazu eingestellt sein.

In einer gleichermaßen bevorzugten Verfahrensvariante wird das Granulat der Brenngasflamme mittels eines Gasstromes zugeführt. Der Gasstrom kann dabei gleichzeitig zur örtlichen Verteilung des Granulats in der Brenngasflamme beitragen, indem er zur Aufwirbelung einer Schüttung des Granulats eingesetzt wird und wodurch einzelne Granulat-Körner aus der Schüttung mit dem Gasstrom in Richtung der Brenngasflamme mitgerissen werden. Der Gasstrom kann zum Beispiel ein Wirbelbett der Schüttung erzeugen, wobei die Schüttung gleichzeitig chemisch und thermisch vorbehandelt werden kann. Der Gasstrom kann auch als Träger für die Zuführung des Granulats zu einem Brenner dienen, der gleichzeitig die Brenngasflamme erzeugt, indem der Gasstrom mit dem Granulat beladen und in den Brenner eingespeist wird.

Alternativ dazu hat sich auch eine Verfahrensweise bewährt, bei der das Granulat der Brenngasflamme unter der Wirkung eines Unterdrucks zugeführt wird. Bei dieser Verfahrensweise wird das Granulat in die Brenngasflamme eingesaugt. Der Unterdruck kann beispielsweise innerhalb des Brenners für die Brenngasflamme erzeugt werden, indem dieser mit einer Venturi-Düse ausgestattet ist, in die das Granulat eingespeist wird.

Als vorteilhaft hat es sich erwiesen, die Brenngasflamme auf eine Temperatur von mindestens 1600 °C, vorzugsweise im Bereich von 2000° C bis 2500° C einzustellen. Eine exakte Messung der Temperatur der Brenngasflamme ist jedoch schwierig, unter anderem, weil beim Einbringen des SiO₂-Granulats in die Brenngasflamme die Flammentemperatur in Abhängigkeit vom Durchsatz des Granulats sinkt. Als Temperatur der Brenngasflamme wird die maximale Temperatur innerhalb der Brenngasflamme ohne Zusatz von Granulat verstanden. Mit der Brenngasflamme sind ohne weiteres Temperaturen erreichbar, bei denen die einzelnen Granulat-Körner vollständig aufschmelzen, was je nach Art und Korncharakteristik des Granulats und Prozeßbedingungen zu einer erwünschten Sphäroidisierung der verglasten SiO₂-Körnung führen kann. Allerdings besteht die Gefahr der Agglomeratbildung, wenn erweichte Körner untereinander oder mit Begrenzungswandungen in Kontakt kommt, bevor wenigstens die Oberfläche der einzelnen Körner wieder abgekühlt und erstarrt ist. Wesentlich dafür ist nicht allein die Flammentemperatur, sondern auch das Volumen der einzelnen Körner, die Verweilzeit der Körnung in der Brenngasflamme, die Abkühlrate und die Dauer der Abkühlphase vor dem Auftreffen auf eine Wandung. Diese Parameter sind jedoch von einem Fachmann anhand weniger Versuche optimierbar. Agglomeratbildung kann auch durch Reduzierung des Feinanteils des Granulats vermieden werden.

Vorteilhafterweise wird der Brenngasflamme eine halogenhaltige Komponente zugeführt. Die halogenhaltige Komponente dient beispielsweise zur Reinigung des Granulats, indem sie mit Verunreinigungen des Granulats unter Bildung flüchtiger Halogenide reagiert, zur Reduzierung des OH-Gehaltes der verglasten Körnung oder zur Einstellung anderer chemischer oder physikalischer Eigenschaften des Quarzglases, wie zum Beispiel der Viskosität. Als halogenhaltige Komponente kommen die Elemente Fluor, Chlor, Brom, Jod, gasförmige chemische Verbindungen dieser Elemente und Gemische der Elemente und Verbindungen in Frage. Die halogenhaltige Komponente kann Bestandteil des Brenngases für die Erzeugung der Brenngasflamme sein, wobei die Brenngasflamme in dem Fall durch exotherme Reaktion zwischen der wasserstoffhaltigen Komponente und der halogenhaltigen Komponente gebildet wird. Bei dieser Verfahrensweise wird die SiO₂-Körnung mittels der Brenngasflamme gleichzeitig erzeugt und gereinigt.

Als besonders günstig hat es sich erwiesen, das Granulat vor dem Verglasen in mindestens einem Sinterschritt vorzuverdichten. Das Vorverdichten kann durch Sintern des Granulats in der Brenngasflamme, durch elektrische Beheizung oder durch Einwirkung von Mikrowellenenergie erfolgen. Beispielsweise wird das Granulat der Brenngasflamme mehrfach zugeführt, wobei beim Sinterschritt keine oder eine nur teilweise Verglasung des Granulats erzielt wird. Beispielsweise kann eine Porosität des Granulats so eingestellt werden, daß Restgase noch entweichen können. Vorverdichtetes Granulat kann langsamer und schonender verglast werden und ergibt porenfreie Quarzglas-Körnung mit theoretischer Dichte.

In einer bevorzugten Verfahrensvariante wird das Granulat beim ersten Sinterschritt einer reaktiven Atmosphäre ausgesetzt. Diese thermische und chemische Behandlung des porösen Granulats erlaubt außer der Vorverdichtung auch eine chemische Veränderung des Granulats. Beispielsweise lassen sich durch Thermochlorierung oder durch Sauerstoffbehandlung des Granulats Verunreinigungen in Form von Metallverbindungen, Wasser, OH-Gruppen bzw. Kohlenstoffresten entfernen, oder das Granulat kann mit Dotierstoffen beladen werden. Vorteilhafterweise wird Granulat mit einer mittleren Korngröße zwischen 50 µm und 300 µm eingesetzt. Die Untergrenze ergibt sich durch die mit der Korngröße abnehmende Rieselfähigkeit des Granulats, die Obergrenze durch die mit der Korngröße zunehmende Heizenergie, die zum Verglasen des Granulats erforderlich ist.

Besonders bewährt hat sich der Einsatz des Verfahrens zum Verglasen von Granulat, das durch Sprühgranulation mittels Zentrifugalzerstäubung erzeugt wird. Derartiges Granulat, das sich durch eine vergleichsweise geringe mittlere Korngröße auszeichnet, ist mit den aus dem Stand der Technik bekannten stationären Verglasungsmethoden ohne Agglomeratbildung kaum zu verglasen. Feinkörniges, glasiges Granulat ist als Filler für Elektronikanwendungen in Vergußmassen besonders geeignet.

Als Ausgangsmaterial für das erfindungsgemäße Verfahren weist das durch Sprühgranulation erzeugte Granulat vorteilhafterweise eine mittlere Komgröße auf, die zwischen 5 µm und 150 µm liegt.

In bezug auf die spezifische Oberfläche des Granulat, was im erfindungsgemäßen Verfahren eingesetzt wird, hat es sich als vorteilhaft erwiesen, wenn diese im Bereich zwischen 5 m²/g und 100 m²/g liegt, gemessen nach der BET (Brunauer-Emmett-Teller)-Methode.

Abhängig vom bestimmungsgemäßen Einsatz der Quarzglas-Körnung wird eine Verfahrensvariante bevorzugt, bei der das Verglasen des porösen Granulats unter reduzierenden Bedingungen erfolgt. Im einfachsten Fall werden beim Verglasen des Granulats in einer Knallgasflamme reduzierende Bedingungen durch einen Wasserstoffüberschuß eingestellt. Es hat sich gezeigt, daß der sich dabei in der glasigen Quarzglas-Körnung einstellende OH-Gehalt mindestens teilweise durch Tempern bei höheren Temperaturen verringert werden kann und insoweit der OH-Gehalt der Quarzglas-Körnung in gewissem Rahmen einstellbar ist.

In einer gleichermaßen bevorzugten Verfahrensvariante erfolgt das Verglasen des porösen Granulats unter oxidierenden Bedingungen. Oxidierende Bedingungen werden im einfachsten Fall beim Verglasen des Granulats in einer Knallgasflamme durch einen Sauerstoffüberschuß eingestellt. Es hat sich gezeigt, daß der sich dabei in der glasigen Quarzglas-Körnung einstellende OH-Gehalt zum größten Teil fest gebunden ist und sich durch Tempern der Körnung bei höheren Temperaturen nicht oder nur geringfügig entfernen läßt. Dies ist vor allem dann vorteilhaft, wenn beim bestimmungsgemäßen Einsatz konstante Eigenschaften der Quarzglas-Körnung erwünscht sind.

Im folgenden wird das erfindungsgemäße Verfahren anhand eines Ausführungsbeispieles und einer Zeichnung näher erläutert.

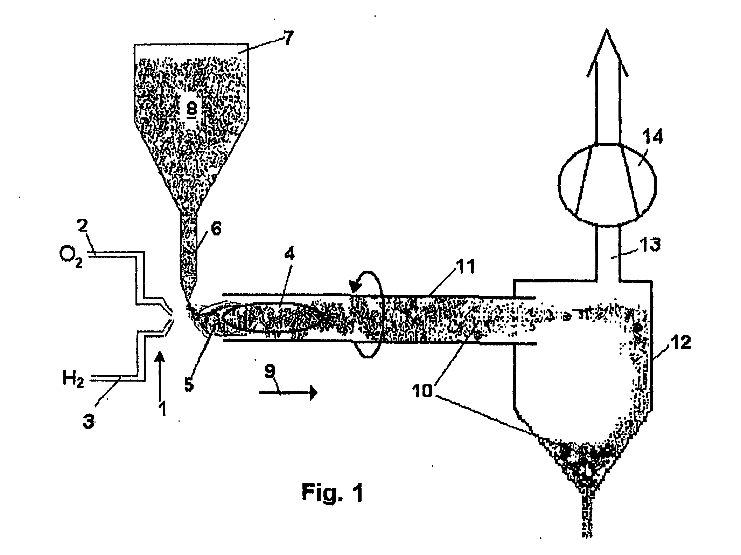

- Figur 1: zeigt anhand einer schematischen Darstellung eine für die Durchführung des erfindungsgemäßen Verfahrens geeignete Vorrichtung.

In Figur 1 ist die Bezugsziffer 1 insgesamt einem Knallgasbrenner zugeordnet, der mit einem Gaseinlaß 2 für Sauerstoff und einem weiteren Gaseinlaß 3 für Wasserstoff aufweist. Sauerstoff und Wasserstoff treten aus voneinander getrennten Brennerdüsen aus dem Brenner 1 aus und reagieren in einerexothermen Knallgasreaktion unter Bildung von H₂O in einer Brennerflamme 5 miteinander. Die Strömungsrichtung der aus dem Brennerkopf austretenden Gasströmung ist mit dem Richtungspfeil 9 gekennzeichnet. Die Lage des heißesten Bereiches der Brennerflamme 5 ist in der Darstellung als Oval mit der Bezugsziffer 4 angedeutet Oberhalb der Brennerflamme 5 mündet ein Schüttrüssel 6, der mit einem Vorratsbehälter 7 für poröses SiO₂-Granulat 8 verbunden ist. Mittels des Schüttrüssels 6 wird das Granulat 8 senkrecht zur Strömungsrichtung 9 in die Brennerflamme 5 eingestreut und darin zu dichter Quarzglas-Körnung 10 verglast, wobei die Verglasung im wesentlichen im heißesten Bereich 4 der Brennerflamme 5 stattfindet. Mittels der Strömung der Brennergase wird die verglaste Quarzglas-Körnung 10 über ein leicht geneigtes Drehrohr 11 aus opakem Quarzglas, das eine Länge von 1,80 m und einen Innendurchmesser von 80 mm aufweist, einem Zyklon 12 zugeführt. Im Zyklon 12 wird die Quarzglas-Körnung 10 vom Abgas 13 getrennt. Hierzu ist ein Gebläse 14 vorgesehen. Die Teile der Vorrichtung, mit der das Granulat 8 und die Quarzglas-Körnung 10 in Berührung kommen, bestehen jeweils aus Quarzglas.

Im folgenden werden Ausführungsbeispiele für das erfindungsgemäße Verfahren anhand der in Figur 1 schematisch dargestellten Vorrichtung näher beschrieben:

### Beispiel 1

Bei dem nachfolgend näher erläuterten Beispiel handelt es sich um einen Laborversuch zur Verglasung von porösem Granulat 8 in einer Acetylen/Sauerstoff-Flamme. In die Brennerflamme 5 wird mit einer Dosierung von 150 g/h amorphes, poröses SiO₂-Granulat 8 eingestreut. Bei dem Granulat 8 handelt es sich um gesiebtes Sprühkorn mit einer Kornfraktion von ≤ 180 µm. Mittels des Schüttrüssels 6 wird das Granulat 8 kontinuierlich in die Brennerflamme 5 eingestreut und darin dispergiert. Durch das Einstreuen werden die einzelnen Körner des Granulats 8 gleichmäßig in der Brennerflamme 5 verteilt und dabei schlagartig erhitzt. Durch das Einstreuen des Granulats 8 ändert sich die Flammentemperatur und - Geometrie; optisch ist eine Änderung der Flamme zu einer helleren Farbe und eine Verbreiterung der heißen Zone 4 wahrzunehmen. Durch das kontinuierliche Einstreuen des Granulats 8 in der Brennerflamme 5 und die feine Verteilung der einzelnen Körner wird die Bildung von Agglomeraten trotz der hohen Temperaturen verhindert. Das Verglasen des Granulats 8 in der Brennerflamme 5 erfolgt (unter reduzierenden Bedingungen) innerhalb von Sekundenbruchteilen. Gröbere Körner werden dabei durch die Strömung der Brenngase stärker beschleunigt als feinere Körner. Die Länge des Drehrohres 11 ist so bemessen, daß im hinteren, nicht beheizten Bereich die erweichte Quarzglas-Körnung 10 erstarren und abkühlen kann, bevor sie mit den Wandungen des Zyklons 12 in Berührung kommt. Das Drehrohr 11 ragt tangential in den Zyklon 12 hinein, in dem die Quarzglas-Körnung 10 vom Abgas getrennt wird.

Die so erhaltene Quarzglas-Körnung 10 fällt als lose Schüttung sphärischer Körner an. Die Ausbeute liegt bei 100%, wobei der Verglasungsvorgang zu einer Volumenabnahme gegenüber der Granulat-Schüttung von ca. 30% führt.

### Beispiel 2

Beim nachfolgend näher erläuterten Ausführungsbeispiel werden mit der Brennereinstellung ebenfalls reduzierende Bedingungen eingestellt. Hierbei wird allerdings eine Knallgasbrenner eingesetzt. Wasserstoff und Sauerstoff reagieren exotherm in einer Knallgasreaktion unter Bildung der Brennerflamme 5 miteinander. Im Ausführungsbeispiel stellt sich im heißesten Bereich 4 der Brennerflamme 5 eine Temperatur von 2200°C ein. In die Brennerflamme 5 wird mit einer Dosierung von 150 g/h amorphes, poröses SiO₂-Granulat 8 eingestreut. Im Unterschied zu Beispiel 1 handelt es sich bei dem Granulat 8 um gesiebtes Sprühkom mit einer Komfraktion von ≤ 90 µm. Die Verglasung des Granulats 8 erfolgt entsprechend dem oben anhand Beispiel 1 beschriebenen Verfahren. Die verglaste feinkörnige Quarzglas-Körnung 10 neigt aufgrund statischer Aufladung dazu, an der Innenwandung des Drehrohres 11 zu haften, was aber durch übliche Maßnahmen zur Ableitung elektrischer Ladungen leicht verhindert werden kann. Auch bei diesem feinkörnigen Ausgangsmaterial fällt die verglaste Quarzglas-Körnung 10 als lose Schüttung sphärischer Körner an. Die Ausbeute liegt bei 100%.

### Beispiel 3

Bei dem nachfolgend näher erläuterten Beispiel handelt es sich um ein Verfahren zur Verglasung von porösem Granulat 8 unter oxidierenden Bedingungen. Dem Knallgasbrenner 1 werden 35 m³/h Wasserstoff und 18 m³/h Sauerstoff zugeführt. Wasserstoff und Sauerstoff reagieren exotherm in einer Knallgasreaktion unter Bildung der Brennerflamme 5 miteinander. Im Ausführungsbeispiel stellt sich im heißesten Bereich 4 der Brennerflamme 5 eine Temperatur von größer 2200°C ein. In die Brennerflamme 5 wird mit einer Dosierung von 300 g/h amorphes, poröses SiO₂-Granulat 8 eingestreut. Das Granulat 8 wird durch ein übliches Naßgranulierungs-Verfahren erhalten. Zur Verglasung wird dann ein getrocknetes Granulat mit einer Siebfraktion zwischen 90 µm und 200 µm eingesetzt. Der Bereich 4 der höchsten Temperatur ist bei Beispiel 3 in seiner Längenausdehnung parallel zum Drehrohr 11 etwas größer als bei den vorherigen Ausführungsbeispielen; ansonsten erfolgt die Verglasung bei dem Verfahren nach Beispiel 3 entsprechend dem von Beispiel 1.

Die so erhaltene verglaste Quarzglas-Körnung 10 fällt als agglomeratfreie, lose Schüttung an. Die Ausbeute liegt bei 100%, wobei eine Verglasungsrate von 100 % erreicht wird.

### Beispiel 4

Bei dem nachfolgend näher erläuterten Beispiel handelt es sich um ein Verfahren zur Verglasung von porösem Granulat 8 unter reduzierenden Bedingungen. Dem Knallgasbrenner 1 werden 35 m³/h Wasserstoff und 14 m³/h eines Mischgases aus Chlor und Sauerstoff zugeführt. Wasserstoff einerseits und Sauerstoff und Chlor andererseits reagieren exotherm in einer Knallgasreaktion bzw. Chlor-Knallgasreaktion unter Bildung der Brennerflamme 5 miteinander. Im Ausführungsbeispiel stellt sich im heißesten Bereich 4 der Brennerflamme 5 eine Temperatur von ca. 2100°C ein. In der Brennerflamme 5 ist HCl und freier Wasserstoff enthalten, darüberhinaus bilden sich darin reaktive Chlorradikale. In die Brennerflamme 5 wird mit einer Dosierung von 300 g/h amorphes, poröses SiO₂-Granulat 8, das dem anhand Beispiel 3 Beschriebenen entspricht, eingestreut. Die Verglasung erfolgt ebenfalls entsprechend dem Verfahren nach Beispiel 3, wobei aber durch chemische Reaktion von Chlor oder von Chlorverbindungen und dem Granulat 8 sowohl der Hydroxylionengehalt der resultierenden Quarzglas-Körnung 10 gesenkt, als auch Verunreinigungen des Granulats 8 in Form fester Metalloxide in die entsprechenden flüchtigen Chloride umgewandelt und so entfernt werden. Die Reaktivität der chlorhaltigen Komponenten wird durch die hohe Temperatur der Brennerflamme 5 erhöht. Darüberhinaus wird die Reinigungswirkung durch die feine Verteilung des Granulats 8 in der Brennerflamme 5 und durch reaktive Chlorradikale noch gefördert. Die so erhaltene Quarzglas-Körnung 10 zeichnet sich durch einen niedrigen Gehalt an Verunreinigungen, wie Alkalien, Erdalkalien und Übergangsmetallen aus und ist im wesentlichen frei von Hydroxylionen. Die Verglasungsrate liegt bei annähernd 100 %.

## Patentansprüche

1. Verfahren für die Herstellung von dichter, amorpher Quarzglas-Körnung, durch Erzeugen eines porösen Granulats aus amorphem SiO₂-Pulver und Verglasen des Granulats, **dadurch gekennzeichnet, daß** das poröse Granulat in einer Brenngasflamme fein verteilt wird, und in der Brenngasflamme unter Kollabieren des Porenraumes im Granulat zu einer transparenten, porenfreien SiO₂- Körnung verglast wird.

2. Verfahren nach Anspruch 1, **dadurch gekennzeichnet, daß** das Granulat in die Brenngasflamme eingerieselt wird.

3. Verfahren nach Anspruch 1, **dadurch gekennzeichnet, daß** das Granulat der Brenngasflamme mittels eines Gasstromes zugeführt wird .

4. Verfahren nach Anspruch 1, **dadurch gekennzeichnet, daß** das Granulat der Brenngasflamme unter der Wirkung eines Unterdrucks zugeführt wird.

5. Verfahren nach einem der vorhergehenden Ansprüche, **dadurch gekennzeichnet, daß** die Brenngasflamme auf eine Temperatur im Bereich von 1600° C bis 2500° C eingestellt wird, vorzugsweise im Bereich von 2000° C bis 2500° C.

6. Verfahren nach einem der vorhergehenden Ansprüche, **dadurch gekennzeichnet, daß** der Brenngasflamme eine halogenhaltige Komponente zugeführt wird.

7. Verfahren nach einem der vorhergehenden Ansprüche, **dadurch gekennzeichnet, daß** das Granulat vor dem Verglasen in mindestens einem ersten Sinterschritt vorverdichtet wird.

8. Verfahren nach Anspruch 7, **dadurch gekennzeichnet, daß** das Granulat beim ersten Sinterschritt eine reaktiven Atmosphäre ausgesetzt wird.

9. Verfahren nach einem der vorhergehenden Ansprüche, **dadurch gekennzeichnet, daß** das Granulat eine mittlere Korngröße zwischen 50 µm und 300 µm aufweist.

10. Verfahren nach einem der vorhergehenden Ansprüche, **dadurch gekennzeichnet, daß** das Granulat durch Sprühgranulation erzeugt wird.

11. Verfahren nach Anspruch 10, **dadurch gekennzeichnet, daß** das mittels Sprüfgranulation erzeugte Granulat eine mittlere Korngröße zwischen 5 µm und 150 µm aufweist.

12. Verfahren nach einem einem der vorhergehenden Ansprüche, **dadurch gekennzeichnet, daß** das Granulat eine spezifische Oberfläche nach BET zwischen 5 m²/g und 100 m²/g aufweist.

13. Verfahren nach einem der vorhergehenden Ansprüche, **dadurch gekennzeichnet, daß** das Verglasen unter reduzierenden Bedingungen erfolgt.

14. Verfahren nach einem der Ansprüche 1 bis 12, **dadurch gekennzeichnet, daß** das Verglasen unter oxidierenden Bedingungen erfolgt.

## Claims

1. A method for producing dense amorphous quartz glass granules by producing porous granules made of amorphous SiO₂ powder and vitrifying the granules, wherein the porous granules are finely dispersed in a combustion gas flame and are vitrified therein by collapsing the pore volume within the granules resulting in transparent pore free SiO₂ granules.

2. A method as claimed in claim 1, wherein the granules are poured into the combustion gas flame.

3. A method as claimed in claim 1, wherein the granules are fed to the combustion gas flame by means of a gas flow.

4. A method as claimed in claim 1, wherein the granules are fed by force of a negative pressure to the combustion gas flame.

5. A method as claimed in one of the aforementioned claims, wherein the combustion gas flame is adjusted to a temperature in the range of 1600° C to 2500° C, preferably in the range of 2000° C to 2500° C.

6. A method as claimed in one of the aforementioned claims, wherein the combustion gas flame is supplied with a halogen containing component.

7. A method as claimed in one of the aforementioned claims, wherein at least in one first sintering step the granules are pre-densified before vitrification.

8. A method as claimed in claim 7, wherein in the first sintering step the granules are subjected to a reactive atmosphere.

9. A method as claimed in one of the aforementioned claims, wherein the granules have an average grain size between 50 µm and 300 µm.

10. A method as claimed in one of the aforementioned claims, wherein the granules are produced by spray granulation.

11. A method as claimed in claim 10, wherein the granules produced by means of spray granulation have a grain size between 5 µm and 150 µm.

12. A method as claimed in one of the aforementioned claims, wherein the granules have a specific surface according to BET between 5 m²/g and 100 m²/g.

13. A method as claimed in one of the aforementioned claims, wherein vitrification occurs under reducing conditions.

14. A method as claimed in one of the claims 1 to 12, wherein vitrification occurs under oxidizing conditions.

## Revendications

1. Procédé pour la fabrication d'une granulométrie dense amorphe de verre de quartz par production d'un granulé poreux de poudre amorphe de SiO₂ et par vitrification du granulé, **caractérisé en ce que** le granulé poreux est reparti finement dans une flamme de gaz à combustion et est vitrifié sous l'effondrement de l'espace de pores dans le granulé en une granulométrie transparente de SiO₂ exempte de pores.

2. Procédé selon la revendication 1, **caractérisé en ce que** le granulé est saupoudré dans la flamme de gaz de combustion.

3. Procédé selon la revendication 1, **caractérisé en ce que** le granulé de la flamme de gaz de combustion est amené au moyen d'un courant de gaz.

4. Procédé selon la revendication 1, **caractérisé en ce que** le granulé est amené à la flamme de gaz de combustion sous l'action d'une dépression.

5. Procédé selon l'une des revendications précédentes, **caractérisé en ce que** la flamme de gaz de combustion est réglée à une température comprise entre 1600°C et 2500°C, de préférence entre 2000°C et 2510°C.

6. Procédé selon l'une des revendications précédentes, **caractérisé en ce qu'**un composant halogéné est amené à la flamme de gaz de combustion.

7. Procédé selon l'une des revendications précédentes, **caractérisé en ce que** le granulé a été prédensifié dans au moins une première étape de frittage.

8. procédé selon la revendication 7, **caractérisé en ce que** le granulé est exposé à une atmosphère réactive dans la première étape de frittage.

9. Procédé selon l'une des revendications précédentes, caractérisé en ce le granulé présente une granulométrie moyenne comprise entre 50 µm et 300 µm.

10. Procédé selon l'une des revendications précédentes, **caractérisé en ce que** le granulé est produit par granulation pulvérisée.

11. Procédé selon la revendication 10, **caractérisé en ce que** le granulé produit par granulation pulvérisée présente une granulométrie moyenne comprise entre 5 µm et 150 µm.

12. Procédé selon l'une des revendications précédentes, **caractérisé en ce que** le granulé présente une surface spécifique selon BET entre 5m²7g et 100 m²/g:

13. Procédé selon l'une des revendications précédentes, **caractérisé en ce que** la vitrification s'effectue dans des conditions de réductions.

14. Procédé selon l'une des revendications 1 à 12, **caractérisé en ce que** la vitrification s'effectue dans des conditions oxydantes.
